**Europäisches Patentamt**

**European Patent Office**

**Office européen des brevets**

(19)

(11) Publication number: **0 208 029**
**B1**

## (12) EUROPEAN PATENT SPECIFICATION

(45) Date of publication of patent specification: **01.02.89**

(21) Application number: **85304868.4**

(22) Date of filing: **08.07.85**

(51) Int. Cl.⁴: **B 65 G 1/04,** B 65 G 1/137,
G 07 F 7/02

(54) **Apparatus for dispensing medication.**

(43) Date of publication of application:
**14.01.87 Bulletin 87/03**

(45) Publication of the grant of the patent:
**01.02.89 Bulletin 89/05**

(84) Designated Contracting States:
**DE FR GB IT SE**

(56) References cited:
**DE-A-3 317 087**
**US-A-3 586 186**
**US-A-3 878 967**
**US-A-4 546 901**

(73) Proprietor: **Buttarazzi, Patrick J.**
**4 Fitch Avenue**
**Auburn New York 13021 (US)**

(72) Inventor: **Buttarazzi, Patrick J.**
**4 Fitch Avenue**
**Auburn New York 13021 (US)**

(74) Representative: **Jackson, Peter Arthur et al**
**GILL JENNINGS & EVERY 53-64 Chancery Lane**
**London WC2A 1HN (GB)**

Courier Press, Leamington Spa, England.

## Description

This invention relates generally to apparatus for dispensing medicinal substances on a large scale, and has special reference to a novel medication dispensing apparatus that is particularly adapted for hospital and nursing home use.

A previous form of apparatus and system for automatically dispensing drug doses in response to programmed input information is disclosed in U.S. patent no: 3,917,045 which is directed to a drug dispensing apparatus for automatically dispensing one or more individual drug doses to a common collection area in accordance with input information representing the medicinal needs of a particular patient.

The apparatus disclosed includes a locked. cabinet which houses a relatively large number of removable and re-fillable cartridges. Each cartridge stores a plurality of individual identical drug doses and has means for sequentially dispensing the doses on a demand basis. The dispensing apparatus also includes means for receiving the input information and control means that responds to the input information and selectively operates the cartridges to dispense an individual drug dose or doses according to the patient's unique medicinal needs.

While this apparatus undoubtedly serves its intended purpose, the construction is relatively complex and thus expensive to produce. In one of the main embodiments, for example, every one of the drug storage cartridges requires an electric motor, a sensor, a switch, indicator lamps and associated pulleys and drive belts, and eighty one such cartridges are shown. In the other main embodiment having at least as many cartridges, each cartridge is equipped with a solenoid and the necessary wiring therefor.

The present invention provides a medication dispensing apparatus for hospital and nursing home use that can satisfy patient prescription requirements on a large scale and at the same time is relatively economical to build and operate. Apparatus in accordance with the invention comprises a vertical rack for storing a substantial number of elongated pill strips one above the other, each having a row of pills mounted thereon in spaced relation to one another, a vertically movable carriage for the rack having means for withdrawing a portion of an individual pill strip from the rack to expose a predetermined number of pills, the carriage being selectively movable with respect to the rack to position the withdrawing means opposite a predetermined pill strip, cutting means on the carriage for cutting the pill strip so that the exposed pill or pills are severed therefrom and means for automatically transporting the pills severed from the pill strip to an inspection station. The selective movement of the carriage is carried out on command from a computer control system so that pills or other medication required by the prescription of a particular patient are automatically dispensed.

The transporting means preferably comprises a conveyor positioned with respect to the vertical rack so that the severed pills fall on to it, a receptacle for receiving the severed pills from the conveyor, and means for automatically moving the receptacle to the inspection station after the pills have been deposited therein. In practice it is desirable to use a plurality of pill receiving receptacles, the apparatus then including means for moving a receptacle along a substantially horizontal path from a storage area to a pill receiving station and from thence to the inspection station. Thus, in operation, the pills are automatically selected from a large array of strips, deposited in an individual patient receptacle and delivered to the inspection station where verification of the prescription is achieved by comparing the tray contents with a display of patient data.

An example of apparatus in accordance with the invention is illustrated in the accompanying drawings, in which:-

Figure 1 is a perspective view of the apparatus;

Figure 2 is a vertical sectional view taken substantially along line 2-2 of Figure 1;

Figure 3 is a top plan view of the apparatus of Figure 1;

Figure 4 is a front elevation of dispensing units forming part of the apparatus, with outer access doors removed;

Figure 5 is an enlarged side elevation, with parts in section, of a dispensing unit carriage assembly;

Figure 6 is a horizontal sectional view taken on line 6-6 of Figure 5;

Figure 7 is a fragmentary top plan view of the carriage assembly looking in the direction of arrows 7-7 of Figure 5;

Figure 8 is a side elevation of carriage assembly cutting mechanism looking in the direction of arrows 8-8 of Figure 5;

Figure 9 is an enlarged front elevation of a storage bin for pill strips, the bin being positioned in a storage rack that is shown fragmentarily; and

Figure 10 is an enlarged, fragmentary perspective view of a pill strip.

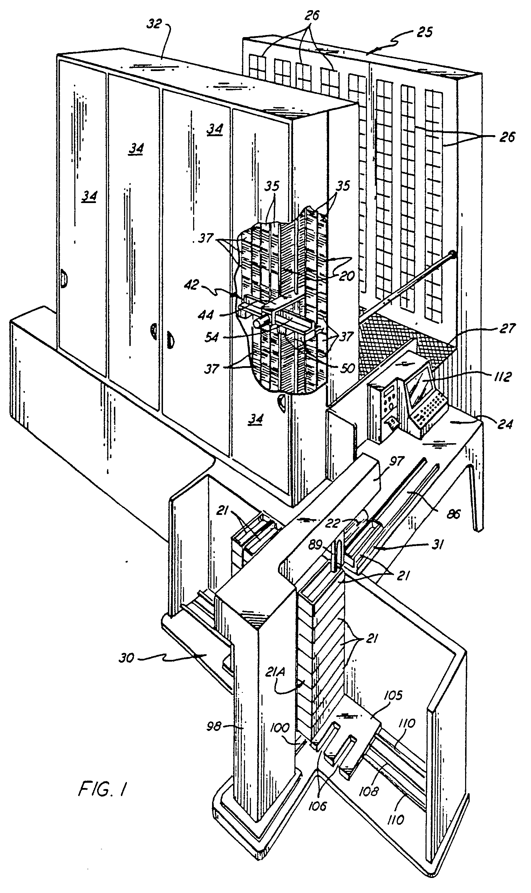

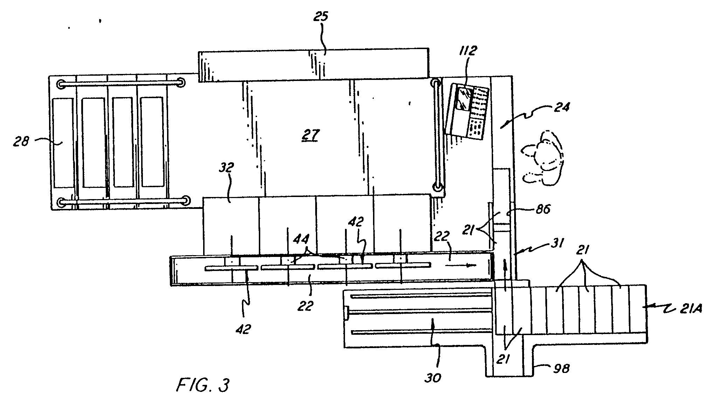

Having particular reference to Figures 1 and 3, the medication dispensing apparatus essentially comprises a plurality of pill dispensing units 20, receptacles in the form of individual trays 21 in which the dispensed pills are deposited, a high speed conveyor belt 22 (Figure 3) that transports the pills from the dispensing units to the trays, and an inspection station 24 to which the trays are delivered after receiving the pills. In this application, the terms "pill" and "medication unit" are used inter-changeably and both terms mean a single dosage of medication that may be in the form of a pill or capsule, and a capsule may contain either a solid or a liquid.

Except for certain operations at the inspection station to be described, the operation of the dispensing apparatus is automatic and is controlled by a computer that is not per se a part of the invention. At the outset, the prescription requirements for all of the patients in the particular institution are key-punched or otherwise entered into the computer control system and thereafter the apparatus operates to dispense the medication required for each prescription on command from the control system.

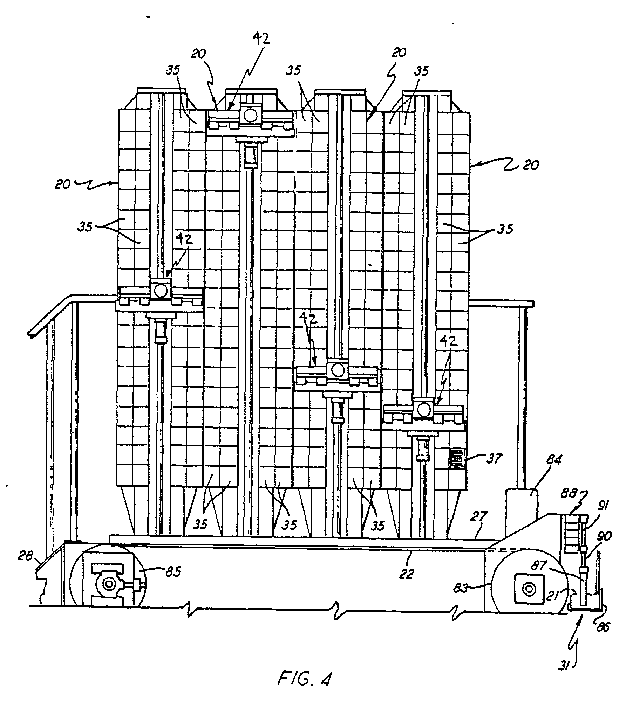

The dispensing apparatus includes a medication supply area 25 (Figure 1) that has sixteen vertical storage racks 26 for storing a reserve supply of medication. Medication in the racks 26 is transferred as needed to the dispensing units 20 by an operator standing on an elevated platform or deck 27 accessible by stairs 28 (Figures 3 and 4). A supply of the pill receiving trays 21 is stored in a storage area 30 (Figure 1), having means for moving successive trays upwardly to a point from which they are moved horizontally to a receiving station 31. At the receiving station the trays receive pills from the conveyor belt 22 and the trays are then moved to the inspection station 24. The means for moving the trays is described hereinafter.

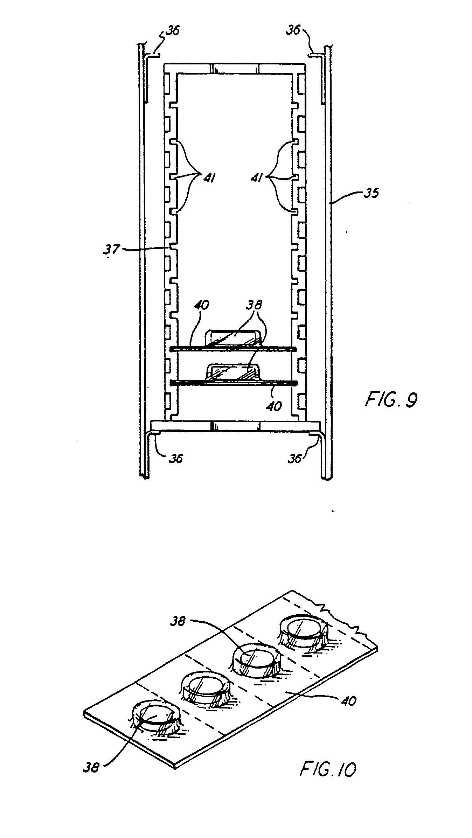

In the illustrated embodiment of the invention, there are four pill dispensing units 20, (Figures 1 and 4), located in a cabinet 32 having access doors 34. Each unit 20 has four vertical racks 35 disposed in side by side relation with the second and third racks being spaced apart as shown for a purpose to be described. As best shown in Figure 9, each rack 35 has a series of opposed brackets 36 for supporting a plurality of bins 37 one above the other, there being a stack of nineteen bins in each rack.

The pills to be dispensed are shown at 38 in Figures 9 and 10. A row of the pills, usually ten in number, is mounted on an elongated strip 40 of cardboard or heavy paper that is stiff enough so that it will not buckle in the transverse direction. The pills, capsules or the like are held in position on the strip by any suitable means such as shrink packaging. The opposite longitudinal edges of the pill strips 40 are received with a sliding fit in opposed grooves 41 in the side walls of the bins 37, each bin being adapted to support ten pill strips as indicated in Figure 9.

The pills 38 are dispensed from the vertical racks 35 in each dispensing unit 20 by a vertically movable carriage assembly indicated generally at 42 in Figures 1 and 4 to 8. Since the carriage assemblies are the same for all of the dispensing units, only one need be described. Carriage 42 includes an elongated, horizontally disposed main plate 44, a portion of which extends into the space between the second and third racks 35 of the dispensing unit 20 as best shown in Figures 1 and 4.

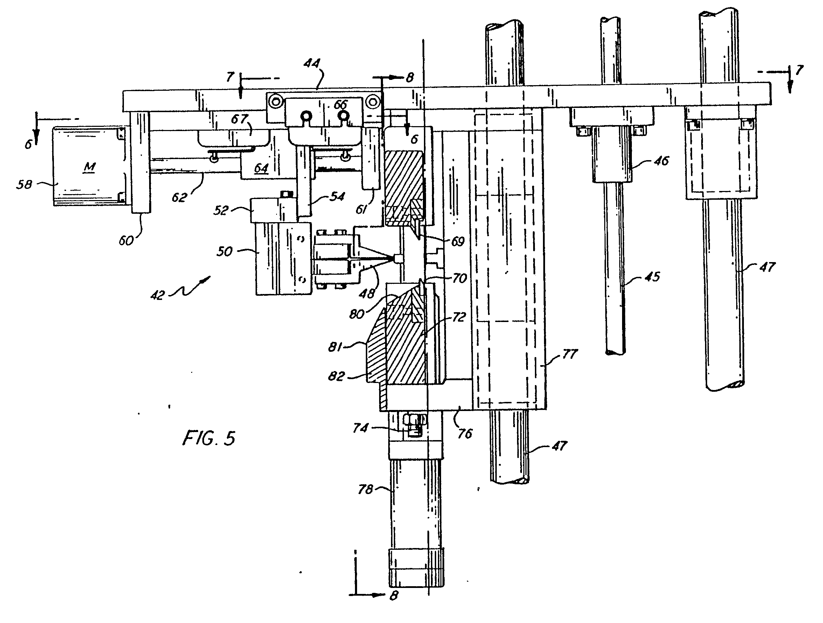

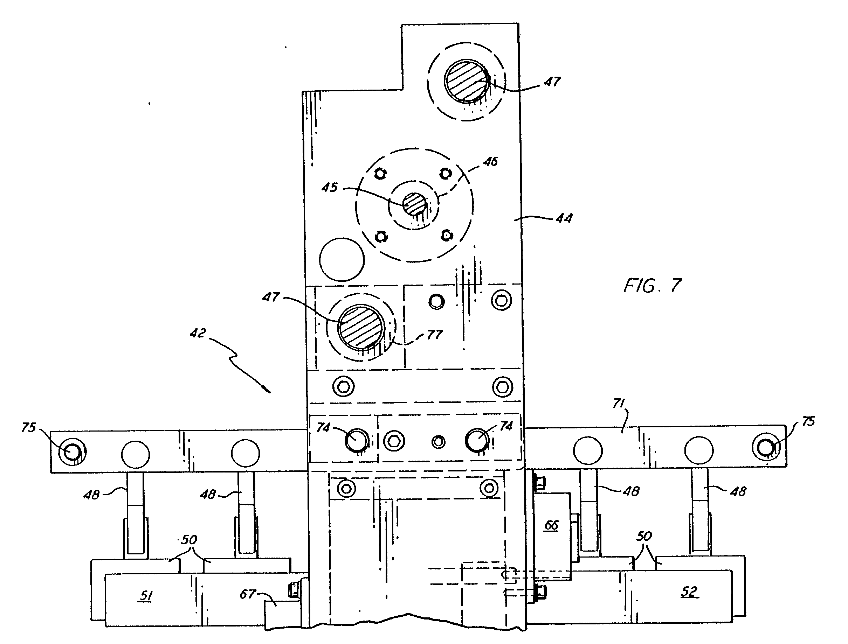

The carriage is moved up or down to a predetermined bin location on command from the control system. This is done by a ball screw drive activated by a conventional stepping motor (not shown). The ball screw drive is essentially comprised of a ball screw 45 and a ball nut 46, (Figures 5 and 7), the latter being secured to the underside of the carriage as shown. The ball screw drive coacts with guide rods 47, and these rods and the drive components are located in the space between the second and third racks.

The pill strips 40 are positioned in predetermined locations in their respective bins 27, and the bins in turn are positioned in predetermined locations in their respective racks 35. As a result of this strategic placement of the medication, the control system will know the precise location to which the carriage must be moved for dispensing the pills for a particular prescription.

The pill strips are withdrawn from the bins by a pair of gripping fingers 48 supported by the carriage, (Figures 5, 6 and 7), there being a pair of such fingers for each of the four racks in a dispensing unit. When the carriage is moved to a predetermined bin location on command, it is actually moved so that its gripping fingers are positioned in horizontal alignment with a preselected pill strip. Each pair of gripping fingers 48 is supported by and connected to a commercially available pick up head 50 such as is marketed by A. G. Russel. The gripping fingers can be moved horizontally towards and away from the pill strip bins 37 as will be described.

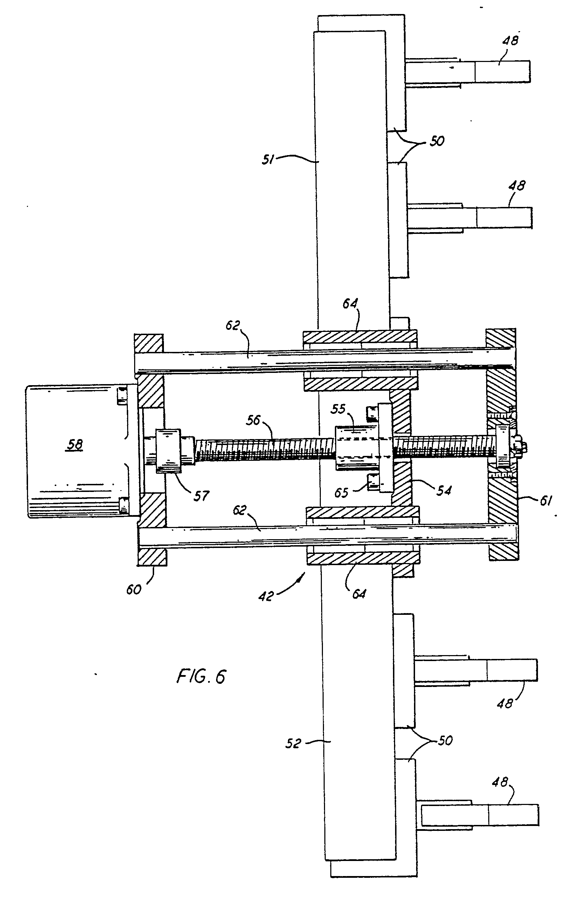

Two of the pick up heads 50 (Figure 6) are secured to a transverse bar 51, while the other two heads are secured to a transverse bar 52, the two bars being in longitudinal alignment with one another as shown. The bars 51, 52 are both welded or otherwise secured to a transverse plate 54, (Figures 5 and 6), that is in turn secured to a ball nut 55 in engagement with a ball screw 56. The screw 56 is connected through a coupling 57 to a stepping motor 58 which operates on command to rotate the screw and thus move the bars 51, 52 and pick up heads 50 towards or away from the pill strip bins 37.

The stepping motor 58 is mounted on a transverse plate 60, (Figures 5 and 6) that is secured to and depends from the underside of the carriage main plate 44. The end of the ball screw 56 opposite the motor is journalled in a transverse plate 61 that also depends from the underside of the carriage main plate. The plate 54 that supports the bars 51 and 52 is guided in its horizontal movement towards or away from the pill strip bins by horizontal guide rods 62, the opposite ends of the rods being supported by the transverse plates 60 and 61 respectively, as best shown in Figure 6. The guide rods pass through guide sleeves 64 secured to the plate 54. This arrangement not only guides the horizontal movement of the bars 51, 52 and gripping fingers 48 but also prevents rotation of ball nut 55 which is secured to the plate 54 as by bolts 65 (Figure 6).

The two pairs of gripping fingers 48 on bar 51 are aligned with the first and second racks 35 of a dispensing unit, while the gripping fingers 48 on bar 52 are aligned with the third and fourth racks. After the carriage has been moved to a predetermined bin location on command from the control system, the stepping motor 58 moves the ball nut 55 and thus all four pairs of gripping fingers 48 forward or towards the pill strip bins 37 until the front edges of the aligned pill strips extend a short distance into the space between the fingers, which are normally open as shown in Figure 5. At that time, forward movement of the fingers stops and one or more of the pick up heads 50 receives a command to close its fingers so that the fingers grasp the edge of the pill strip therebetween. Thereafter, all of the fingers are moved in the opposite direction a predetermined distance whereby a predetermined number of pills on the strip that has been grasped are withdrawn from its bin. This strip is then cut by a cutting mechanism to be described whereupon the pills that have been withdrawn are severed from the remainder of the strip.

Movement of the pairs of gripping fingers towards the bins 37 for engagement with a selected pill strip is limited by the engagement of plate 54 with a limit switch 66 (Figures 5 and 7) mounted on the carriage main plate 44. Movement of the gripping fingers in the opposite direction, after a selected pill strip has been withdrawn from its bin and one or more pills have been severed from it, is limited by the engagement of plate 54 with a limit switch 67 mounted on the main plate 44. Except when the gripping fingers are moved towards the bins to withdraw a pill strip, plate 54 is in engagement with switch 67 so that the gripping fingers do not interfere with the up and down movement of carriage assembly 42.

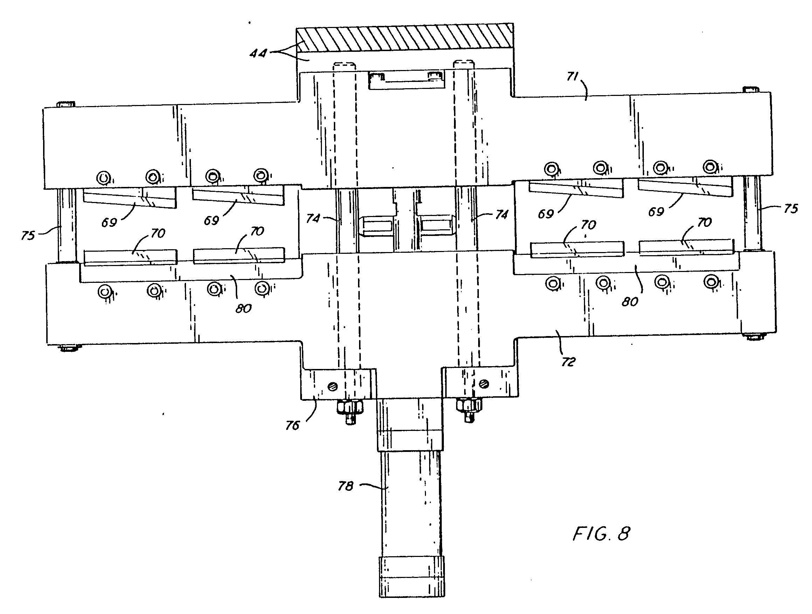

The cutting mechanism for each dispensing unit 20 includes four pairs of blades, (Figures 5 and 8), each blade pair having an upper blade 69 and a lower blade 70. There is a blade pair for each of the four racks 35 in the dispensing unit, and the blade pairs are in vertical alignment with the respective pairs of gripping fingers for the racks. The blades are slightly wider than the pill strips 40, and are brought together with a shearing action to cut any strips that have been withdrawn from the bins 37.

The upper and lower blades 69, 70 are respectively carried by horizontal bars 71 and 72 (Figure 8), and these bars are guided for vertical sliding movement towards and away from one another by inner vertical guide rods 74 and outer vertical guide rods 75. The upper ends of the inner rods 74 are threaded into the carriage main plate 44 while the lower ends of these rods are secured to a U-shaped plate 76. As best shown in Figure 5, plate 76 is secured as by welding to the bearing sleeve 77 for the outer carriage main plate 44.

The cutting blades 69 and 70 are normally held in their spaced apart or open position, as shown in Figures 5 and 8, by a conventional air cylinder 78 that is supported by the plate 76. This permits the gripping fingers 48 to pass between the blades and withdraw selected pill strips. When the blades are in their spaced apart position, the upper blade carrying bar 71 bears against the underside of the carriage main plate 44 and the lower blade carrying bar 72 bears against the U-shaped plate 76.

After the gripping fingers have grasped a selected pill strip and withdrawn one or more pills, the air cylinder 78 operates in a substantially conventional manner to move the blades together whereby the pills that have been withdrawn are severed from the remainder of the pill strip. The severed pills drop down onto the conveyor belt 22 (Figures 1, 3 and 4) for delivery by the belt to the receiving station 31. As the severed pills drop they are directed toward the conveyor belt by inclined surfaces 80 (Figures 5 and 8), on the lower blade carrying bar 72 and an inclined surface 81 on a supplemental bar 82.

As best shown in Figures 3 and 4, the conveyor belt 22 extends across all four of the dispensing units 20, the upper reach of the belt being spaced below the racks 35 as shown in Figure 4. The belt passes around a power drum 83 driven by a motor 84 at one end and around a take-up drum 85 at its other end.

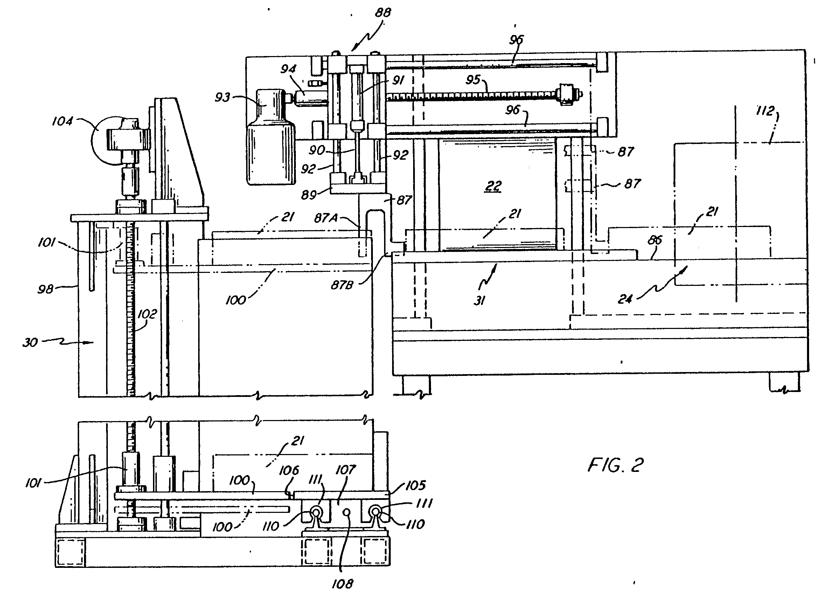

As noted previously, pills delivered by the conveyor belt to the receiving station 31 are deposited in an individual patient tray 21 (Figures 1 and 3) which is then moved on to the inspection station 24. Stacks of the trays 21 are stored in storage area 30 (Figure 1) and the top tray of one of the stacks 21A is at the same level as, and in alignment with, a horizontal tray track 86 leading to the inspection station. The top tray referred to is adapted to be moved along the track 86 by a retractable pusher unit 87, (Figures 1 and 2), supported by a pusher carriage indicated generally at 88 in Figure 2, the carriage to be described in greater detail hereinafter.

The pusher unit 87 has the general shape of an inverted U, and on its working stroke moves from left to right as viewed in Figures 1 and 2. The back leg 87A of the pusher unit is arranged to engage the leading end of the top tray 21 as shown in Figure 1 and move it from its stack to the receiving station 31. At the same time, the front leg 87B of the pusher unit engages the trailing end of a tray that has already been filled at the receiving station and moves it to the inspection station 24.

Movement of a pair of trays to new stations as above described actuates a limit switch (not shown) that causes the pusher unit 87 to move upwardly until it is clear of the trays. To this end, the unit is connected at its upper end to a plate 89 (Figure 2) that is in turn connected through a rod 90 to a conventional air cylinder 91 mounted on the pusher carriage 88. Guide rods 92 co-act up the rod 90 to ensure vertical movement of the pusher unit 87 without rotation.

At the termination of the upward movement of pusher unit 87, another limit switch (not shown) is actuated which causes the carriage 88 with its pusher unit 87 to be moved from right to left back to its starting position shown in Figures 1 and 2. Horizontal movement of carriage 88 and attached pusher unit 87 is effected by a drive motor 93 that is connected by a coupling 94 to a ball screw 95. The ball screw engages a ball nut (not shown) mounted on the carriage 88 whereby rotation of the screw causes horizontal movement of the carriage, the carriage being guided in such movement by horizontal guide rods 96. The drive motor 93 and the ends of the rods 96 are secured to suitable fixed structure (not shown) located inside an elongated horizontal housing 97 (Figure 1) that projects from the upper end of a vertically disposed hollow stanchion 98 forming a part of the dispensing unit.

Movement of the carriage 88 back to its starting position, (Figures 1 and 2) as described above actuates another limit switch (not shown) that causes the entire stack 21A of trays to be moved upwardly a distance equal to the height of one tray whereupon the top tray of the stack is again level with the tray track 86 and ready to be moved to the right to receiving station 31. When the top tray reaches the level of the track 86, a further limit switch causes the pusher unit 87 to be lowered so that its leg 87A is in position to push the top tray, and leg 87B is in position to push the tray at the receiving station. The tray feed cycle is then ready to begin again.

The mechanism for intermittently elevating the stack of trays 21A as shown in Figures 1 and 2 includes a lift arm 100 that is positioned below the bottom tray as indicated in Figure 1. Lift arm 100 is connected at one end to a ball nut 101 (Figure 2) that is engaged by a ball screw 102. The ball screw can be rotated in either direction by a ball screw motor 104. The motor 104 rotates the ball screw on command to move the stack of trays 21A upwardly a distance equal the height of one tray following each movement of the top tray in the stack to the receiving station 31.

After the last tray in the stack has been advanced to the receiving station, the motor 104 will be actuated by a suitable limit switch or the like to rotate the ball screw in the reverse direction until the lift arm 100 is moved down to its lowermost position shown in phantom lines in Figure 2. A substantial number of trays 21 can be stored in a plurality of stacks in the storage area 30 (Figure 1) and these stacks are positioned on a horizontally movable carriage 105. After the stack of trays 21A, for example, has been depleted and the lift arm 100 has been moved down to its lowermost position below the carriage as shown in Figure 2, the carriage will be moved one tray increment to the right as viewed in Figure 1 to bring a new stack of trays into alignment with the horizontal tray track 86.

It may be seen from Figures 1 and 2 that the tray carriage 105 is provided with a plurality of spaced recesses 107 that are dimensioned so as to receive the outer part of the lift arm 100 with a clearance fit. After the carriage has been moved to position a new stack of trays in alignment with the tray track 86, the arm is raised up into the recess beneath the stack to intermittently elevate the stack as previously described.

The mechanism for horizontally moving the tray carriage 105 includes a ball nut 107 secured to the underside of the carriage (Figure 2) and a ball screw 108 in engagement with the ball nut. The screw can be rotated in either direction by a suitable ball screw motor (not shown) to cause the carriage movement, this movement being guided by guide rods 110 that are engaged by bearing sleeves 111 secured to the bottom of the carriage.

When the last tray 21 in the last stack of trays has been moved to the receiving station 31, a warning light (not shown) will come on to advise an operator that the storage area 30 must be resupplied with stacks of trays. At this time, the tray carriage 105 may have been moved all the way to the right as viewed in Figure 1, in which case the replacement stacks of trays can be loaded onto the carriage in this position (see Figure 3). The carriage movement will then be from right to left to bring the successive tray stacks into alignment with the tray track 86.

The operation of the medication dispensing apparatus can be summarised as follows. At the outset, the prescription requirements for all of the patients are key-punched or otherwise entered into the computer control system for the apparatus. At this time, it may be assumed that the pill bins 37 are loaded with pill strips, that the storage area 30 is supplied with stacks of trays 21 and that an empty tray is positioned at the receiving station 31 as shown in Figure 1. At any time after the prescription requirements have been entered into the control system, the apparatus can be activated and the pill dispensing carriage assemblies 42 will be selectively moved as programmed to simultaneously dispense from one or more of the dispensing units 20 the pills required for the first prescription to be filled. Because the pill strips will have been positioned in precise, predetermined locations in the dispensing units, the dispensing carriage assemblies will know to which locations they should advance. The pills dispensed for the prescription will drop substantially simultaneously onto the conveyor belt 22 which may run continuously during operation of the apparatus or may be activated only after all of the pills for a particular prescription have been deposited on the belt.

When the pills on the belt have been deposited in the tray waiting at the receiving station 31, the pusher unit 87 will move the filled tray to the inspection station 24 and at the same time advance the empty top tray of the tray stack 21A to the receiving station to await the next prescription. At the inspection station there is a CRT display 112, and the display that appears will be synchronised with the arrival of the patient tray at the station.

The inspection station will be attended by a pharmacist who will compare the pills in the tray with the prescription shown in the display, the display information having been derived from the information originally entered into the computer control system. Preferably, the original handwritten doctor's prescription will also appear as a double check in making the comparison.

The CRT display may show that additional medications not handled by the dispensing apparatus are required in which case these will be manually added to the tray by the pharmacist. In addition to displaying the particular patient prescription, the equipment at the inspection station will print out the prescription and patient identification data on a label which will be attached to the tray.

The remaining prescriptions will be individually dispensed and compared in the same manner until all of the prescriptions have been filled. It is contemplated that the control system will have the capability of analysing drugs in a particular prescription for possible harmful inter-action and also for known patient allergies. The control system will also have the capability of maintaining inventory and billing functions.

From the foregoing description, it will be apparent that the invention disclosed herein provides a novel and very advantageous medication dispensing apparatus.

## Claims

1. Medication dispensing apparatus comprising a vertical rack (35) for storing a substantial number of elongated pill strips (40) one above the other, each having a row of pills (38) mounted thereon in spaced relation to one another, a vertically movable carriage (42) for the rack having means (48) for withdrawing a portion of an individual pill strip from the rack (35) to expose a predetermined number of pills, the carriage (42) being selectively movable with respect to the rack (35) to position the withdrawing means (48) opposite a predetermined pill strip, cutting means (69, 70) on the carriage (35) for cutting the pill strip (40) so that the exposed pill or pills (38) are severed therefrom and means for automatically transporting the pills severed from the pill strip to an inspection station (24).

2. Apparatus according to claim 1 in which the transporting means comprises a conveyor (22) positioned with respect to the vertical rack so that the severed pills fall on to it, a receptacle (21) for receiving the severed pills from the conveyor (21), and means for automatically moving the receptacle to the inspection station after the pills have been deposited therein.

3. Apparatus according to claim 2 wherein there are a plurality of pill receiving receptacles (21), the apparatus including means for moving a receptacle along a substantially horizontal path from a storage area (30) to a pill receiving station (31) and from thence to the inspection station (234).

4. Apparatus according to claim 3, in which the means for moving a receptacle from the receiving station (31) to the inspection station (24) is operable at the same time to move another receptacle from the storage area to the receiving station.

5. Apparatus according to claim 3 or claim 4 wherein the receptacles (21) in the storage area (30) are arranged in vertically stacked relation to one another, the uppermost receptacle being in horizontal alignment with the horizontal path of movement.

6. Apparatus according to claim 5 wherein the stacked receptacles (21) in the storage area (30) are positioned on a vertically movable lift arm (100), the arm being operable to move the receptacle stack upwardly a distance equal to the height of one receptacle when the uppermost receptacle is moved from the storage area to the receiving station (31).

7. Apparatus according to any one of the preceding claims and comprising a plurality of vertical racks (35) for storing pill strips and in which the carriage (42) has, for each rack, means for grasping an exposed edge of a pill strip and withdrawing a portion of it from the rack.

8. Apparatus according to claim 7, in which the racks (35) are disposed in a row in side by side relation and a portion of the movable carriage (42) is wide enough to span the racks, being provided with withdrawing means in the form of pairs of gripping fingers, each pair vertically aligned with one of the racks.

9. Apparatus according to claim 8 and including at least one dispensing unit comprising four vertical racks (35), the row of racks being arranged so that there is a space between the second and third racks, a portion of the vertically movable carriage being positioned opposite the space and another portion spanning the racks adjacent the front sides thereof, the pairs of gripping fingers being mounted on the last-named carriage portion in vertical alignment with their respective racks.

10. Apparatus according to any one of the preceding claims, wherein the or each vertical rack is arranged to support a plurality of removable bins (37) one above the other, each bin having means for supporting the opposite longitudinal edges of the pill strips (40).

11. Apparatus according to claim 9 wherein the bins (37) are substantially rectangular in shape and are open on their front sides to expose the front edges of the pill strips (40) to the withdrawing means (48).

## Patentansprüche

1. Abgabevorrichtung für Medikamente mit einem vertikalen Regal (35) zur Lagerung einer wesentlichen Anzahl von länglichen Tablettenstreifen (40) den eine über dem anderen, je mit einer Reihe von in Abständen zueinander darauf angeordneten Tabletten (38), mit einem vertikal bewegbaren Schlitten (42) für das Regal mit Mitteln (48) zum Abziehen eines Teils eines einzelnen Tablettenstreifens aus dem Regal (35) zur Darbietung einer vorbestimmten Anzahl von Tabletten, wobei der Schlitten (42) gegenüber dem Regal (35) zur Positionierung der Abziehmittel (48) gegenüber einem vorbestimmten Tablettenstreifen selektiv bewegbar ist, mit Schneidemitteln (69, 70) an dem Schlitten (42) zum Abschneiden des Tablettenstreifens (40) so, daß die dargebotene(n) Tablette oder Tabletten (35) von diesem abgeschnitten wird bzw. werden, und mit Mitteln zum automatischen Transport der von dem Tablettenstreifen abgeschnittenen Tabletten zu einer Inspektionsstation (24).

2. Vorrichtung nach Anspruch 1, dadurch gekennzeichnet, daß die Transportmittel einen Förderer (22), der hinsichtlich des vertikalen Regals so angeordnet ist, daß die abgeschnittenen Tabletten auf ihn herunterfallen, ein Behältnis (21) zur Aufnahme der abgeschnittenen Tabletten von dem Förderer (22) und Mittel zur automatischen Bewegung des Behältnisses zu der Inspektionsstation umfassen, nachdem die Tabletten darin abgelegt worden sind.

3. Vorrichtung nach Anspruch 2, dadurch gekennzeichnet, daß eine Vielzahl von Tabletten aufnehmenden Behältnissen (21) vorgesehen ist, wobei die Vorrichtung Mittel zur Bewegung eines Behältnisses entlang einer im wesentlichen horizontalen Bahn von einem Speicherbereich (30) zu einer Tablettenaufnahmestation (31) und von dort zu der Inspektionsstation (24) umfassen.

4. Vorrichtung nach Anspruch 3, dadurch gekennzeichnet, daß die Mittel zur Bewegung eines Behältnisses von der Aufnahmestation (31) zu der Inspektionsstation (24) zur selben Zeit zur Bewegung eines anderen Behältnisses von dem Speicherbereich zu der Aufnahmestation in Betrieb nehmbar sind.

5. Vorrichtung nach Anspruch 3 oder Anspruch 4, dadurch gekennzeichnet, daß die Behältnisse (21) in dem Speicherbereich (30) in vertikal gestapelter Beziehung zueinander angeordnet sind, wobei sich das oberste Behältnis in horizontaler Ausrichtung zu der horizontalen Bewegungsbahn befindet.

6. Vorrichtung nach Anspruch 5, dadurch gekennzeichnet, daß die gestapelten Behältnisse (21) in dem Speicherbereich (30) an einem vertikal bewegbaren Hebearm (100) angeordnet sind, wobei der Arm zur Bewegung des Behältnisstapels nach oben um eine Distanz gleich der Höhe eines Behältnisses betätigbar ist, wenn das oberste Behältnis aus dem Speicherbereich zu der Aufnahmestation (31) bewegt wird.

7. Vorrichtung nach irgendeinem der vorausgehenden Ansprüche, dadurch gekennzeichnet, daß eine Vielzahl vertikaler Regale (35) zur Lagerung von Tablettenstreifen vorgesehen ist und daß der Schlitten (42), für jedes Regal, Mittel zur Erfassung eines freigelegten Randes eines Tablettenstreifens und zum Abziehen eines Teils von diesem aus dem Regal aufweist.

8. Vorrichtung nach Anspruch 7, dadurch gekennzeichnet, daß die Regale (35) in einer Reihe in nebeneinander angeordneter Beziehung zueinander angeordnet sind und daß ein Teil des bewegbaren Schlittens (42) breit genug ist, die Regale zu überspannen, und mit Abziehmitteln in der Form von paarweisen Greiffingern ausgestattet ist, wobei jedes Paar vertikal mit einem der Regale fluchtet.

9. Vorrichtung nach Anspruch 8, gekennzeichnet durch mindestens eine Abgabeeinheit mit vier vertikalen Regalen (35), wobei die Reihe der Regale so angeordnet ist, daß ein Raum zwischen dem zweiten und dem dritten Regal besteht, ein Teil des vertikal bewegbaren Schlittens gegenüber dem Raum angeordnet ist und ein weiterer Teil die Regale in der Nähe der Vorderseiten derselben überspannt und die Paare der Greiffinger an dem letzt erwähnten Schlittenteil in vertikaler Ausrichtung zu ihren entsprechenden Regalen angeordnet sind.

10. Vorrichtung nach irgendeinem der vorausgehenden Ansprüche, dadurch gekennzeichnet, daß das oder jedes vertikale Regal zur Abstützung einer Vielzahl bewegbarer Gestelle (37) eins über dem anderen dient, wobei jedes Gestell Mittel zur Abstützung einander gegenüberliegender Längsränder der Tablettenstreifen (40) aufweist.

11. Vorrichtung nach Anspruch 9, dadurch gekennzeichnet, daß die Gestelle (37) im wesentlichen rechteckiger Gestalt und an ihren Vorderseiten offen sind, um die Vorderkannten der Tablettenstreifen (40) den Abziehmitteln (48) darzubieten.

**Revendications**

1. Appareil de distribution de médicaments, comprenant un râtelier vertical (35) destiné à stocker un nombre important de bandes allongées (40) de pilules placées les unes au-dessus des autres et ayant chacune une ligne de pilules (38) qui sont disposées sur la bande à distance les unes des autres, un chariot (42) mobile verticalement par rapport au râtelier et ayant un dispositif (48) d'extraction d'une portion d'une bande individuelle de pilules du râtelier (35) afin qu'il expose un nombre prédéterminé de pilules, le chariot (42) étant mobile sélectivement par rapport au râtelier (35) afin qu'il place le dispositif d'extraction (48) en face d'une bande prédéterminée de pilules, un dispositif decoupe (69, 70) monté sur le chariot (35) et destiné à découper la bande (40) de pilules afin que la pilule ou les pilules exposées (38) en soient séparées, et un dispositif destiné à transporter automatiquement les pilules séparées de la bande à pilules à un poste d'inspection (24).

2. Appareil selon la revendication 1, dans lequel le dispositif de transport comprend un transporteur (22) positionné par rapport au râtelier vertical afin que les pilules séparées tombent sur lui, un réceptacle (21) destiné à recevoir les pilules séparées du transporteur (22), et un dispositif destiné à déplacer automatiquement le réceptacle au poste d'inspection après que les pilules y ont été déposées.

3. Appareil selon la revendication 2, dans lequel plusieurs réceptacles (21) de réception de pilules sont disposés, l'appareil comprenant un dispositif de déplacement d'un réceptacle suivant un trajet sensiblement horizontal, d'une zone de stockage (30) à un poste (35) de réception de pilules puis au poste d'inspection (24).

4. Appareil selon la revendication 3, dans lequel le dispositif de déplacement d'un réceptacle depuis le poste de réception (31) jusqu'au poste d'inspection (24) assure en même temps le déplacement d'un autre réceptacle de la zone de stockage au poste de réception.

5. Appareil selon la revendication 3 ou 4, dans lequel les réceptacles (21) placés dans la zone de stockage (30) sont empilés verticalement les uns sur les autres, le réceptacle supérieur étant aligné horizontalement sur le trajet horizontal de déplacement.

6. Appareil selon la revendication 5, dans lequel les réceptacles empilés (21) présents dans la zone de stockage (30) sont disposés sur un bras (100) de levage, mobile verticalement, le bras étant commandé afin qu'il déplace l'empilement de réceptacles vers le haut d'une distance égale à la hauteur d'un réceptacle lorsque le réceptacle supérieur est déplacé de la zone de stockage au poste de réception (31).

7. Appareil selon l'une quelconque des revendications précédentes, comprenant plusieurs râteliers verticaux (35) destinés à stocker des bandes de pilules, et dans lequel le chariot (42) a, pour chaque râtelier, un dispositif de saisie d'un bord exposé d'une bande de pilules et d'extraction d'une partie de la bande du râtelier.

8. Appareil selon la revendication 7, dans lequel les râteliers (35) sont disposés en lignes, côte à côte, et une partie du chariot mobile (42) est suffisamment large pour qu'elle recouvre les râteliers, et comporte des dispositifs d'extraction sous forme de paires de doigts de saisie, chaque paire étant alignée verticalement sur l'un des râteliers.

9. Appareil selon la revendication 8, comprenant au moins un ensemble de distribution comportant quatre râteliers verticaux (35), la rangée de râteliers étant disposée de manière qu'un espace soit présent entre le second et le troisième râtelier, une partie du chariot mobile verticalement étant placée en face de cet espace et une autre partie recouvrant les râteliers près de leur face avant, les paires de doigts de saisie étant montés sur la dernière partie citée de chariot dans l'alignement vertical des râteliers respectifs.

10. Appareil selon l'une quelconque des revendications précédentes, dans lequel le râtelier ou chaque râtelier vertical est réalisé afin qu'il supporte plusieurs compartiments amovibles (37) placés les uns au-dessus des autres, chaque compartiment comprenant un dispositif de support des bords longitudinaux opposés des bandes (40) de pilules.

11. Appareil selon la revendication 9, dans lequel les compartiments (37) ont une forme sensiblement rectangulaire et sont ouverts à leur face avant afin que les bords avant des bandes de pilules (40) soient exposés aux dispositifs d'extraction (48).

FIG. 1

FIG. 2

FIG. 3

3

FIG. 4

EP 0 208 029 B1

FIG. 5

5

FIG. 6

FIG. 7

FIG. 8

FIG. 9

FIG. 10